(19) Europäisches Patentamt / European Patent Office / Office européen des brevets

(11) **EP 2 708 122 A1**

(12) **EUROPEAN PATENT APPLICATION**

(43) Date of publication:
**19.03.2014 Bulletin 2014/12**

(21) Application number: **13005722.7**

(22) Date of filing: **05.08.2005**

(51) Int Cl.:
*A01N 25/00* (2006.01)          *A01N 25/08* (2006.01)
*A01N 25/10* (2006.01)          *A01N 25/12* (2006.01)
*A01N 43/50* (2006.01)          *A01N 47/30* (2006.01)
*A01N 47/44* (2006.01)          *A01P 7/04* (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.08.2004  JP 2004231403**
**25.02.2005  JP 2005050857**

(62) Document number(s) of the earlier application(s) in accordance with Art. 76 EPC:
**05768907.7 / 1 774 853**

(71) Applicant: **NIPPON SODA CO., LTD.**
**Chiyoda-ku,**
**Tokyo 100-8165 (JP)**

(72) Inventors:
• **Maekawa, Yuichi**
**Shizuoka, 4210412 (JP)**
• **Endo, Yoshihisa**
**Shizuoka, 4210412 (JP)**
• **Enomoto, Yoshihiro**
**Takaoka-shi, Toyama, 9338507 (JP)**

(74) Representative: **Wibbelmann, Jobst**
**Wuesthoff & Wuesthoff**
**Patent- und Rechtsanwälte**
**Schweigerstrasse 2**
**81541 München (DE)**

Remarks:
This application was filed on 09-12-2013 as a divisional application to the application mentioned under INID code 62.

(54) **Agricultural-chemical preparation having controlled releasability**

(57)  An object of the present invention is to provide an agricultural chemical formulation which is able to control release of an agricultural chemical active ingredient. This agricultural chemical formulation includes a composition, containing an agricultural chemical active ingredient, styrene-maleic anhydride copolymer or mixture of styrene-maleic anhydride copolymer and polymer having repeating units derived from rosin or derivative thereof or salicylic acid or derivative thereof, and a release controller (a water-soluble polymer, a hydrophobically-treated silicon oxide, or a surfactant), forming a compatible state or matrix.

EP 2 708 122 A1

**Description**

TECHNICAL FIELD

The present invention relates to an agricultural chemical formulation in which release of the agricultural chemical active ingredient is controlled.

The present application claims priority on Japanese Patent Application No. 2004-231403, filed on August 6, 2004, and on Japanese Patent Application No. 2005-050857, filed on February 25, 2005, the content of which is incorporated herein by reference.

BACKGROUND ART

A known example of an agricultural chemical formulation that controls the release of an agricultural chemical active ingredient is an agricultural chemical-containing resin composition having the ability to control the release of an agricultural chemical active ingredient obtained by heating and mixing the following components (a), (b) and (c) ((a): at least one type of readily-water-soluble agricultural chemical active ingredient, (b) non-water-soluble substance or poorly water-soluble substance having a melting point or softening point of 50°C to lower than 130°C, (c) white carbon) at a temperature equal to or higher than the melting point or softening point of (b), and a nonionic surfactant can be added as necessary (see Patent Literature 1).

In addition, a controlled release agricultural chemical composition for water surface application having satisfactory floating mobility, which contains an agricultural chemical-containing resin composition including an agricultural chemical active ingredient, polyethylene and hydrophobic silica, its production process and a controlled release agricultural chemical composition are also known (see Patent Literature 2).

[Patent Literature 1] Japanese Unexamined Patent Application, First Publication No. H8-92007
[Patent Literature 2] Japanese Unexamined Patent Application, First Publication No. H11-315004

However, these formulations had the problem of the release control of the agricultural chemical active ingredient not always being adequate.

An object of the present invention is to provide an agricultural chemical formulation capable of controlling the release of an agricultural chemical active ingredient.

DISCLOSURE OF THE INVENTION

As a result of extensive studies to solve the aforementioned problems, the inventors of the present invention found that the aforementioned problems can be solved by forming an active agricultural chemical active ingredient into a compatible state or matrix with a poorly water-soluble resin such as styrene-maleic anhydride copolymer with a hydrophobically-treated silicon oxide, thereby leading to completion of the present invention.

Namely, a first aspect of the present invention is an agricultural chemical-containing resin composition, including: a composition containing (1) an agricultural chemical active ingredient, (2) styrene-maleic anhydride copolymer or styrene-maleic anhydride copolymer-resin mixture, and (3) a release controller, forming a compatible state or matrix.

According to the present invention, it is possible that a resin other than the styrene-maleic anhydride copolymer of the styrene-maleic anhydride copolymer-resin mixture is a rosin or derivative thereof, or a copolymer having repeating units derived from salicylic acid or derivative thereof.

Also, according to the present invention, it is possible that the release controller is a water-soluble polymer, silicon oxide or surfactant.

Moreover, according to the present invention, it is possible that the silicon oxide is hydrophobic white carbon.

Furthermore, according to the present invention, it is possible that the agricultural chemical active ingredient is an ingredient for which the solubility in water at 25°C is 100 ppm or more.

In addition, according to the present invention, it is possible that the agricultural chemical active ingredient is a neonicotinoid-based compound.

Also, according to the present invention, it is possible that the neonicotinoid-based compound is at least one selected from the group consisting of nitenpyram, imidacloprid, acetamiprid, thiamethoxam, clothianidin, thiacloprid and dinotefuran.

Moreover, according to the present invention, it is possible that the mean particle size of the active ingredient is 200 $\mu$m or less.

Furthermore, according to the present invention, it is possible that the mean particle size of the active ingredient is within the range of 1 to 100 $\mu$m.

A second aspect of the present invention is a production process of the agricultural chemical-containing resin composition of the present invention, including a step in which (1) an agricultural chemical active ingredient, (2) styrene-maleic anhydride copolymer or styrene-maleic anhydride copolymer-resin mixture, and (3) a release controller are mixed, melted by heating, kneaded and cooled.

A third aspect of the present invention is a production process of the agricultural chemical-containing resin composition of the present invention, including a step in which (1) an agricultural chemical active ingredient, (2) styrene-maleic anhydride copolymer or styrene-maleic anhydride copolymer-resin mixture, and (3) a release controller are dissolved, dispersed or mixed in an organic solvent followed by distilling off the organic solvent.

A fourth aspect of the present invention is a production process of an agricultural chemical-containing resin composition of the present invention, including a step in which after (2) a styrene-maleic anhydride copolymer or styrene-maleic anhydride copolymer-resin mixture is dissolved in an alkali aqueous solution, (1) agricultural chemical active ingredient and (3) a release controller are dissolved, dispersed or mixed to prepare an acidic solution followed by filtration and drying.

A fifth aspect of the present invention is an agricultural chemical formulation, including: an agricultural chemical-containing resin composition of the present invention.

A sixth aspect of the present invention is an agricultural chemical formulation, including: at least one of an agricultural chemical-containing resin composition containing (1) an agricultural chemical active ingredient, (2) styrene-maleic anhydride copolymer or styrene-maleic anhydride copolymer-resin mixture, and (3) a release controller, forming a compatible state or matrix, the agricultural chemical-containing resin composition having a mean particle size of 200 $\mu$m or less, and the formulation is used as a seed treatment agent, soil treatment agent or post-emergence agent.

Also, according to the present invention, it is possible that the mean particle size of the agricultural chemical-containing resin composition is within the range of 1 to 100 $\mu$m.

Moreover, according to the present invention, it is possible that the agricultural chemical active ingredient is an ingredient for which the solubility in water at 25°C is 100 ppm or more.

Furthermore, according to the present invention, it is possible that the agricultural chemical active ingredient is a neonicotinoid-based compound.

In addition, according to the present invention, it is possible that the neonicotinoid-based compound is at least one selected from the group consisting of nitenpyram, imidacloprid, acetamiprid, thiamethoxam, clothianidin, thiacloprid and dinotefuran.

Also, according to the present invention, it is possible that the agricultural chemical formulation further includes: at least one agricultural chemical active ingredient other than the agricultural chemical-containing resin composition.

Moreover, according to the present invention, it is possible that at least one of the agricultural chemical active ingredient other than the agricultural chemical-containing resin composition is a pyrethroid.

A seventh aspect of the present invention is a treatment method including: treating with a composition containing at least one of the agricultural chemical formulation of the present invention and at least one agricultural chemical active ingredient either simultaneously or at different times.

Also, according to the present invention, it is possible that at least one of the agricultural chemical active ingredient is a pyrethroid.

An eighth aspect of the present invention is a plant seed treated using a treatment method of the present invention.

A ninth aspect of the present invention is an agricultural chemical-containing formulation, including: at least one of the agricultural chemical-containing resin composition of the present invention, or at least one of the agricultural chemical-containing resin composition or at least one of the agricultural chemical active ingredient of the present invention, wherein the agricultural chemical-containing formulation being used in an application selected from the group consisting of pharmaceuticals, veterinary medicines, food preservatives and biocide agents.

Also, according to the present invention, it is possible that the application is selected from the group consisting of soil pest extermination agents, termite extermination agents, clothing agents, pest insect extermination agents, wood pest insect extermination agents, bait agents, animal external parasite extermination agents, sanitary pest insect extermination agents, home disinfectants, marine vessel bottom coatings, fishing net and others algae prevention agents, and wood and others mildew-proofing agents.

Also, according to the present invention, it is possible that at least one of agricultural chemical active ingredients of the agricultural chemical-containing resin composition of the present invention is a pyrethroid.

EFFECT OF THE INVENTION

As has been described above, since the use of an agricultural chemical formulation of the present invention makes it possible to inhibit the phenomenon in which a large amount of an agricultural chemical active ingredient is released in a short period of time immediately after agricultural chemical treatment, namely the phenomenon in which the initial burst is inhibited and the agricultural chemical active ingredient which should inherently be released remains without the entire amount being released, or in other words, dead stock, residual efficacy can be maintained, the problem of an increased amount of agricultural chemical active ingredient remaining in the crop or causing chemical damage can be solved, and the agricultural chemical active ingredient can be prevented from remaining in the environment. In addition, an agricultural chemical formulation of the present invention, in addition to the effects described above, also improves light stability, controls dispersivity, has the effects of improving residual efficacy of the agricultural chemical active ingredient and reducing loss into the environment by improving rain resistance, and has effects such as reducing the total amount of agricultural chemical sprayed, reducing the number of sprayings, and reducing toxicity to the sprayer, and is particularly useful as a seed treatment agent and soil treatment agent.

BEST MODE FOR CARRYING OUT THE INVENTION

An agricultural chemical active ingredient used in the present invention is not limited to being a liquid or solid, organic compound or inorganic compound, or single compound or mixture, specific examples of which include the fungicide, insecticides, acaricides, plant growth regulators, herbicides and so forth indicated below. Furthermore, these agricultural chemical active ingredients can be used alone or as a mixture of two or more types.

Fungicides:

Copper agents: basic copper chloride, basic copper sulfate
Sulfur agents: thiuram, zineb, maneb, mancozeb, ziram, propineb, polycarbamate, etc.
Polyhaloalkylthio agents: captan, folpet, dichlorofluanid, etc.
Organic chlorine agents: chlorothalonil, fthalide, etc.
Organic phosphorous agents: IBP, EDDP, trichlophosmethyl, pyrazophos, fosetyl, etc.
Benzimidazole agents: thiophanate-methyl, benomyl, carbendazim, thiabendazole, etc.
Dicarboxyimide agents: iprodione, procymidone, vinclozolin, fluoroimide, etc.
Carboxyamide agents: oxycarboxin, mepronil, flutolanil, tecloftalam, trichlamide, pencycuron, etc.
Acylalanine agents: metalaxyl, oxadixyl, furalaxyl, etc.
Methoxyacrylate agents: kresoxim-methyl, azoxystrobin, metominostrobin, etc.
Anilinopyrimidine agents: andoprin, mepanipyrim, pyrimethanil, diprozinil, etc.
SBI agents: triadimefon, triadimenol, bitertanol, myclobutanil, hexaconazole, propiconazole, triflumizole, prochloraz, pefurazoate, fenarimol, pyrifenox, triforine, flusilazole, etaconazole, dichlobutorazol, fluotrimazole, flutriafen, penconazole, diniconazole, imazalil, tridemorph, fenpropimorph, buthiobate, epoxiconazole, metoconazole, etc.
Antibiotic agents: polyoxins, blasticidin-S, kasugamycin, validamycin, dihydrostreptomycin sulfate, etc.
Others: propamocarb hydrochloride, quintozene, hydroxyisoxazole, methasulfocarb, anilazine, isoprothiolane, probenazole, chinomethionat, dithianon, dinocap, diclomezine, ferimzone, fluazinam, pyroquilon, tricyclazole, oxolinic acid, dithianon, iminoctadine acetate, cymoxanil, pyrrolnitrin, methasulfocarb, diethofencarb, binapacryl, lecithin, sodium bicarbonate, fenaminosulf, dodine, dimethomorph, phenazine oxide, carpropamid, flusulfamide, fludioxonil, famoxadon, etc.

Insecticides/Acaricides:

Organic phosphorous and carbamate-based insecticides: fenthion, fenitrothion, diazinon, chlorpyrifos, ESP, vamidothion, phenthoate, dimethoate, fonnothion, malathion, trichlorfon, thiometon, phosmet, dichlorvos, acephate, EPBP, methyl parathion, oxydemeton-methyl, ethion, salithion, cyanophos, isoxathion, pyridafenthion, phosalone, methidathion, sulprofos, chlorfenvinphos, tetrachlorvinphos, dimethylvinphos, propaphos, isofenphos, ethylthiometon, profenofos, pyraclofos, monocrotophos, azinphos-methyl, aldicarb, methomyl, thiodicarb, carbofuran, carbosulfan, benfuracarb, furathiocarb, propoxur, BPMC, MTMC, MIPC, carbaryl, pirimicarb, ethiofencarb, fenoxycarb, etc.
Pyrethroid-based insecticides: permethrin, cypermethrin, deltamethrin, fenvalerate, fenpropathrin, pyrethrins, allethrin, tetramethrin, resmethrin, dimethrin, propathrin, phenothrin, prothrin, fluvalinate, cyfluthrin, cyhalothrin, flucythrinate, etofenprox, cycloprothrin, tralomethrin, silafluofen, Halfenprox, acrinathrin, etc.
Benzoylurea-based and other insecticides: diflubenzuron, chlorfluazuron, hexaflumuron, triflumuron, flufenoxuron, flucycloxuron, buprofezin, pyriproxyfen, methoprene, benzoepin, diafenthiuron, acetamiprid, imidacloprid, nitenpyram, fipronil, cartap, thiocyclam, bensultap, nicotine sulfate, rotenone, metaldehyde, machine oil, BT, insect pathogen viruses and other microbial agricultural chemicals, pheromone agents, etc.
Nematicides: phenamiphos, fosthiazate, etc.

Acaricides: chlorobenzilate, phenisobromolate, dicofol, amitraz, BPPS, benzomate, hexathiazox, fenbutatin oxide, polynactin, quinomethionate, CPCBS, tetradifon, abamectin, milbemectin, clofentezine, cyhexatin, pyridaben, fenpyroximate, tebufenpyrad, pyrimidifen, fenothiocarb, dienochlor, etc.
Plant Growth Regulators: gibberellins (e.g., gibberellin A3, gibberellin A4, gibberellin A7, IAA, NAA, etc.

Herbicides:

Anilide-based herbicides: diflufenican, propanil, etc.
Chloroacetoanilide-based herbicides: alachlor, pretilachlor, etc.
Allyloxyalkanoic acid-based herbicides: 2,4-D, 2-4-DB, etc.
Allyloxyphenoxyalkanoic acid-based herbicides: diclofop-methyl, fenoxaprop-ethyl, etc.
Allylcarboxylic acid-based herbicides: dicamba, pyrithiobac, etc.
Imidazoline-based herbicides: imazaquin, imazethapyr, etc.
Urea-based herbicides: diuron, isoproturon, etc.
Carbamate-based herbicides: chlorprofam, fenmedifam, etc.
Thiocarbamate-based herbicides: thiobencarb, EPTC, etc.
Dinitroaniline-based herbicides: trifluralin, pendimethalin, etc.
Diphenyl ether-based herbicides: aciflurofen, fomesafen, etc.
Sulfonylurea-based herbicides: bensulfuron-methyl, nicosulfuron, etc.
Triazinone-based herbicides: metribuzin, metamitron, etc.
Triazine-based herbicides: atrazine, cyanazine, etc.
Triazopyrimidine-based herbicides: flumetsulam, etc.
Nitrile-based herbicides: bromoxinil, dichlobenil, etc.
Phosphoric acid-based herbicides: glyphosate, glyphosinate, etc.
Quaternary ammonium salt-based herbicides: paraquat, difenzoquat, etc.
Cyclic imide-based herbicides: flumiclorac-pentyl, fluthiacet-methyl, etc.
Benzoylaminopropionic acid-based herbicides: benzoylprop-ethyl, fenoxaprop-ethyl, etc.
Other herbicides: isoxaben, ethofumesate, oxadizon, piperophos, diamuron, bentazone, benfuresate, difenzoquat, naproanilide, triazofenamide, quinclorac, clomazone, sulcotrione, cinmethylin, dithiopyr, pyrazolate, pyridate, flupoxam, and cyclohexanedione-based herbicides such as sethoxydim and tralkoxydim, etc.

Synergists/Antidotes: octachlorodipropyl ether, piperonyl butoxide, cyneprin, IBTA, benoxacor, cloquintocet, ciometranil, dichlormid, fenchlorazole-ethyl, fencloram, flurazole, flaxofenimi, furilazole, mefenpyr-diethyl, MG191, naphthalic anhydride, oxabetrinil, neonicotinoid-based compounds.

Antibacterial/antifungal/antialgae agents: trialkyltriamine, ethanol, isopropyl alcohol, propyl alcohol, trisnitro, chlorobutanol, pronopol, glutaraldehyde, formaldehyde, α-bromcinnamaldehyde, scane M-8, caisson CG, NS-500W, BIT, n-butyl BIT, allyl isothiocyanate, thiobendazole, methyl 2-benzimidazolyl carbamate, lauricidine, biovan, triclocarban, halocarban, glasisicar, benzoic acid, sorbic acid, caprylic acid, propionic acid, 10-undecylenic acid, potassium sorbate, potassium propionate, potassium benzoate, monomagnesium phthalate, zinc undecylenate, 8-hydroxyquinoline, copper quinoline, TMTD, triclosan, diclohelanilide, tolyfluanid, milt protein, egg white lysozyme, benthiazole, sodium carbam, triazine, tebuconazole, hinokithiol, tetrachloroisophthalonitrile, tectamer 38, chlorhexidine gluconate, chlorhexidine hydrochloride, polyhexamethylene biguanide, polybiguanide hydrochloride, danthoprom, clidant, sodium pyrithion, zinc pyrithion, densil, kappa-pyrithion, thymol, isopropyl methyl phenol, OPP, phenol, butyl paraben, ethyl paraben, methyl parabenzene, propyl parabenzene, metacresol, orthocresol, paracresol, sodium orthophenyl phenol, chlorofen, parachlorophenol, parachloromethaxylate, parachlorocresol, fluorfolpet, polylysine, biopan P-1487, Jote methylparatolylsulfone, polvvinylpyrrolidone parachloroisocyanel, hydrogen peroxide, stabilized chlorine dioxide, peracetic acid, copper naphthenate, novalon AG 300, silver chloride, titanium oxide, silver, zinc-calcium phosphate, Silver Ace, silver-zinc aluminosilicate, silver-zinc zeolite, novalon AGZ330, phorone killer, dimmer 136, benzalkonium chloride, didecyl dimethyl ammonium chloride, bardack 2250/80, benzotonium chloride, high-amy 3500J, cetylammonium bromide, Cetrimide, CTAB, Cetavlon, Dimer-38, benzalkonium chloride, BARDAC® 170P, DC-5700, cetyl pyridinium chloride, chitosan, deuron, DCMU, prepentol A6, CMI, 2CI-OIT, BCM, ZPT, BNP, OIT, IPBC, TCMSP, etc.

Use of an agricultural chemical formulation of the present invention allows release control even in the case of using a compound having a comparatively high solubility in water (25°C) of 100 ppm or more, and more preferably 500 ppm or more. An example of agricultural chemical active ingredients having a comparatively high solubility include neonicotinoid-based compounds, preferable examples of which include nitenpyram, imidacloprid, acetamiprid, thiamethoxam, clothianidin, thiacloprid and dinotefuran.

Specific examples of a styrene-maleic anhydride copolymer or its derivatives used in the present invention include derivatives that have been esterified by an alcohol, sulfonated by a sulfonating agent and imidated by an amine, and types resulting from additional neutralization of an esterified derivative, with particularly preferable examples of styrene-maleic anhydride copolymers and their derivatives being those that have been esterified by an alcohol. In addition, there are no particular limitations on the polymerized form of the styrene-maleic anhydride copolymer, and random, block or graft forms can be used.

Specific examples of resins used by mixing with styrene-maleic anhydride copolymer and its derivatives include polyolefin-based resins, poly(meth)acrylic-based resins, polystyrene-based resins, polyester-based resins, polyvinyl chloride-based resins, polyvinylidene chloride-based resins, polyamide resins, polyacetal resins, polycarbonate resins and polyurethane resins.

Specific examples of polyolefin-based resins include polyethylene resins such as low-density polyethylene, medium-density polyethylene, high-density polyethylene, polyethylene wax, and ethylene-$\alpha$-olefin copolymer elastomers that are typically used as molding resins; and, ethylene-vinyl acetate copolymer, ethylene-(meth)acrylic acid copolymer, polypropylene, propylene-ethylene copolymer, ethylene-propylene copolymer, polybutene, and ethylene- propylene-butadiene copolymer.

Specific examples of poly(meth)acrylic-based resins include methyl methacrylate homopolymers, (meth)acrylic-based copolymers, in which ethylene, styrene, $\alpha$-methyl styrene and acrylonitrile have been respectively copolymerized with acrylic acid ester or methacrylic acid ester, and impact-resistant (meth)acrylic resins, in which butadiene, styrene or acrylonitrile has been copolymerized with (meth)acrylic acid ester.

Specific examples of polystyrene-based resins include styrene homopolymers that are typically used as molding resins, as well as high-impact polystyrene (HIPS), methyl methacrylate-butadiene-styrene copolymer, styrene-maleic anhydride copolymer, styrene-(meth)acrylic acid copolymer and styrene-acrylonitrile copolymer.

Specific examples of polyester-based resins include aromatic polyesters such as polyethylene terephthalate, polypropylene terephthalate and polyethylene naphthalate, and polyesters obtained by condensation of diols and carboxylic acid that are used in coating resins and so forth. Particularly preferable examples include aliphatic polyesters obtained by condensation polymerization of an aliphatic diol and dicarboxylic acid.

In particular, examples of polyester-based resins include biodegradable resins such as polyhydroxyalkanoate copolymers represented by 3-hydroxybutyrate • 3-hydroxyvalerate copolymers, homopolymers consisting only of hydroxyalkanoate represented by polylactic acid, and copolymers of polycaprolactone or polylactic acid and polyester.

Specific examples of polyvinyl chloride-based resins include vinyl chloride homopolymers, and copolymers of vinyl chloride and ethylene, propylene, acrylonitrile, vinylidene chloride and vinyl acetate, respectively.

Among these resins, rosin derivatives or polymer derivatives having repeating units derived from salicylic acid are particularly preferable in consideration of compatibility with agricultural chemical active ingredients and control of release.

Rosin derivatives refer to abietic acid, which is the main component of pine tar, and its derivatives, specific examples of which include tall rosin, rosin-modified phenol and rosin-modified maleic acid.

Polymers having repeating units derived from salicylic acid or its derivatives may include other structures as repeating units provided they contain salicylic acid or its derivatives as repeating units within the polymer, specific examples of which include polymers in which two or more molecules of salicylic acid, which may be the same or of two or more types, are condensed, and polymers in which salicylic acid and another hydroxycarboxylic acid are condensed. A more specific example is the linear polysalicylate produced by PROVIRON.

The specific mixing ratio of the synthetic resins used is preferably within the range of 30 to 99% by weight of styrene-maleic anhydride copolymer and 1 to 70% by weight of a copolymer having repeating units derived from rosin or its derivatives or from salicylic acid or its derivatives, and more preferably, within the range of 50 to 99% by weight of the former and 1 to 50% by weight of the latter (these resins may also be referred to as poorly water-soluble resins).

The hydrophobically-treated silicon oxide used in the present invention refers to that in which hydrophilic silanol groups (Si-OH) on the surface of the silicon oxide are hydrophobically treated by chemical modification, heat treatment and so forth. In the present invention, hydrophobic treatment should be performed at least on the surface of the silicon oxide, and although all of the silanol groups inside the silicon oxide may be hydrophobically treated, preferably only the surface is hydrophobically treated.

There are no particular limitations on the method of hydrophobic treatment, and specific examples include hydrophobic treatment using silicone oil, and alkylation of the silanol groups, and alkyl groups having 1 to 30 carbon atoms are preferable. Specific examples of surface hydrophobic groups include $(CH_3)_3Si-$, $(CH_3)_2Si-$, $(-Si(CH_3)_2-O-)_n$ and $C_8H_{17}Si-$. In addition, hydrophobic silicon dioxide and so forth used in the present invention is preferably in the form of extremely minute, amorphous particles having a primary particle mean particle size of 0.5 to 100 nm. Specific examples of hydrophobic silicon dioxide include baked white carbon and hydrophobic white carbon, and more specifically, products such as Sipernat D17 (Degussa, registered trademark) and Aerosil R972 (Aerosil, registered trademark).

An agricultural chemical-containing resin composition of the present invention is characterized by a composition containing the aforementioned (1) agricultural chemical active ingredient, (2) styrene-maleic anhydride copolymer or mixture of styrene-maleic acid copolymer and a polymer having repeating units derived from rosin or derivative thereof or salicylic acid or derivative thereof, and (3) hydrophobically-treated silicon oxide, forming a compatible state or matrix. A compatible state or matrix refers to a state in which an agricultural chemical active ingredient is dissolved or dispersed in a non-discontinuous (continuous phase) poorly water-soluble resin. The mixing ratio of each component is arbitrarily set to maximize gradual release of the agricultural chemical active ingredient, and although there are no particular limitations on this ratio, the agricultural chemical active ingredient is preferably within the range of 1 to 80% by weight, the poorly water-soluble resin 19 to 98% by weight, and the hydrophobic silicon oxide and so forth 1 to 80% by weight, and more preferably the agricultural chemical active ingredient is within the range of 10 to 50% by weight, the poorly water-soluble resin 45 to 85% by weight, and the hydrophobic silicon oxide and so forth 5 to 50% by weight.

There are no particular restrictions on the production process of an agricultural chemical-containing resin composition of the present invention provided it allows the formation of a compatible state or matrix, specific examples of which include a production process having a step in which an agricultural chemical active ingredient, poorly water-soluble resin and hydrophobically- treated silicon oxide are mixed, melted by heating, kneaded and cooled (to also be referred to as a melting method), or a step in which an agricultural chemical active ingredient, poorly water-soluble resin and hydrophobically-treated silicon oxide are dissolved, dispersed and mixed in an organic solvent followed by distilling off the organic solvent (to also be referred to as a solvent method), or a step in which a poorly water-soluble resin is dissolved in an aqueous alkaline solution, and an agricultural chemical active ingredient and hydrophobically-treated silicon oxide are added, dissolved, dispersed and mixed, and the pH value of this mixed solution are changed to acidic by hydrogen chloride to obtain precipitation followed by filtration and drying (to also be referred to as a pH precipitation method), or a fine granulation step.

Specific examples of melting methods include a method in which a poorly water-soluble resin is placed in a kneader and melted by heating followed by respectively adding an agricultural chemical active ingredient and hydrophobically-treated silicon oxide, melting and kneading, and then extruding with a single screw or double screw extruder and forming into pellets with a pelletizer, followed by pulverizing the resulting pellets and placing in a crusher to form into fine particles; and a method in which a mixture of an agricultural chemical active ingredient, poorly water-soluble resin and hydrophobically-treated silicon oxide and so forth is heated, melted and kneaded in a heated, continuous kneader, and the resulting kneaded product is cooled and broken up followed by crushing to form fine particles.

There are no particular limitations on the melting temperature in the melting method provided the agricultural chemical active ingredient is not decomposed and adequately melts or uniformly mixes with the resin. In addition, in the melting method, although it is desirable to produce the agricultural chemical-containing resin composition in a short period of time and use as low a temperature as possible to heat and melt the resin to avoid decomposition of the agricultural chemical active ingredient by heat, since there are cases in which it is difficult to obtain a dissolved or uniformly mixed resin even if adequately stirred due to viscosity increasing at low temperatures, there are cases in which a uniform composition can be obtained even in a highly viscous state by adding a surfactant.

A specific example of a solvent method includes placing a solvent in a container that allows distillation under reduced pressure, respectively adding a poorly water-soluble resin and agricultural chemical active ingredient, completely dissolving the resin and agricultural chemical active ingredient by heating and stirring, adding hydrophobically- treated silicon oxide and so forth and dispersing or dissolving, followed by completely distilling off the solvent by heating and concentrating under reduced pressure, and applying the resulting powder to a crusher to form fine particles.

There are no particular limitations on the solvent used in the solvent method provided it dissolves the resin and agricultural chemical active ingredient used and allows them to be stable therein, specific examples of which include aromatic or aliphatic hydrocarbons such as xylene, toluene, alkyl naphthalene, phenylxylylethane, kerosene, gas oil, hexane and cyclohexane, halogenated hydrocarbons such as chlorobenzene, dichloromethane, dichloroethane and trichloroethane, alcohols such as methanol, ethanol, isopropyl alcohol, butanol, hexanol and ethylene glycol, ethers such as diethyl ether, ethylene glycol dimethyl ether, tetrahydrofuran and dioxane, esters such as ethyl acetate and butyl acetate, ketones such as acetone, methyl ethyl ketone, methyl isobutyl ketone and cyclohexanone, nitriles such as acetonitrile and isobutyronitrile, acid amides such as dimethylsulfoxide, N,N-dimethylformamide and N,N-dimethylacetamide, an vegetable oils such as soybean oil and cottonseed oil. Particularly preferable examples include dichloromethane, acetone and methanol.

Moreover, although there are no particular limitations on the mixing ratio of solvent and poorly water-soluble resin provided the amount of solvent is able to dissolve the agricultural chemical active ingredient and poorly water-soluble resin, it is preferably within the range of 10 to 20% by weight. Although it is desirable to dissolve using as little solvent as possible since costs are not wasted on distilling off the excess solvent, since there are cases in which it is difficult to obtain a dissolved or uniformly mixed resin by stirring due to viscosity increasing with a small amount of solvent, there are cases in which a uniform composition can be obtained even in a highly viscous state by adding a surfactant. The temperature at which the agricultural chemical active ingredient and resin are dissolved is preferably 20 to 40°C to maintain the stability of the agricultural chemical active ingredient.

Although an ordinary method can be used to distill off the solvent, specific examples include vacuum distillation, heated distillation and heated vacuum distillation. In addition, examples of other methods that can be used include a method in which a second solvent in which the resin and agricultural chemical active ingredient are insoluble is added, and the precipitated solid matter is filtered, and a method in which a spray-drying granulator is used.

In the melting and solvent methods, the order in which agricultural chemical active ingredient, poorly water-soluble resin and hydrophobic silicon oxide are melted or dissolved may be simultaneous or in any order, they may be melted or dissolved over the course of several times, or the melting and solvent methods may be used in combination according to the composition.

A specific example of a pH precipitation method includes completely dissolving a poorly water-soluble resin and agricultural chemical active ingredient in an ammonia solution, and after adding and dispersing hydrophobic silicon oxide and so forth, hydrochloric acid is added to form an acidic solution. The resulting precipitate is then filtered and dried, and the resulting powder is applied to a crusher to form fine particles.

A pulverizer used for extrusion-molded granules or a pin mill or jet mill crusher used for wettable powders can be used for the pulverizing and granulation methods of the present formulation even in the case of agricultural chemical-containing resin compositions produced by any method. In addition, in the case of producing an agricultural chemical-containing resin composition using the solvent method, in addition to the methods described above, distilling off the solvent and fine particle formation can be carried out simultaneously using a spray-drying granulator.

There are no particular limitations on the release control agent provided it is able to promote or suppress the amount of agricultural chemical active ingredient eluted from a compatible state or matrix, and control that release, specific examples of which include water-soluble polymers, silicon oxide and surfactants.

Specific examples of water-soluble polymers include naturally-occurring water-soluble polymers such as starch and gelatin, semi-synthetic cellulose derivatives such as carboxymethyl cellulose, methyl cellulose and propoxypropyl cellulose, and synthetic water-soluble polymers such as polyvinyl alcohol, polyacrylic acid-based polymers, polyacrylamide and polyethylene glycol.

A specific example of a silicon oxide is white carbon. More specifically, examples of white carbon include ordinary white carbon, baked white carbon and hydrophobic white carbon. Ordinary white carbon refers to the generic term for amorphous silicon dioxide composed of $SiO_2$, and is classified as precipitation method silica or fumed silica according to differences in the production process. Baked white carbon refers to white carbon in which the surface silanol groups have been made to be hydrophobic by treating ordinary white carbon at a high temperature, while hydrophobic white carbon refers to that previous described. In order to control the release of agricultural chemical active ingredient, or eliminate segregation caused by settling and segregation by uniformly dispersing in a solvent, hydrophobic white carbon is used particularly preferably, specific examples of which include those previously described.

There are no limitations on the surfactant used in the present invention provided it can be used in ordinary agricultural chemical formulations. Specific examples of nonionic surfactants include sugar ester-type surfactants such as sorbitan fatty acid esters ($C_{12-18}$), POE sorbitan fatty acid esters ($C_{12-18}$) and sucrose fatty acid esters, fatty acid ester-type surfactants such as POE resin acid esters ($C_{12-18}$), POE resin acid esters and POE resin acid diesters, alcohol-type surfactants such as POE alkyl ethers ($C_{12-18}$), alkyl phenol-type surfactants such as POE alkyl ($C_{12-18}$) phenyl ethers, POE dialkyl ($C_{8-12}$) phenyl ethers and POE alkyl ($C_{8-12}$) phenyl ether formaldehyde condensation products, polyoxyethylene-polyoxypropylene block polymer-type surfactants such as polyoxyethylene-polyoxypropylene block polymers and alkyl ($C_{12-18}$) polyoxyethylene-polyoxypropylene block polymer ethers, alkyl amine-type surfactants such as POE alkyl amines ($C_{12-18}$) and POE fatty acid amides ($C_{12-18}$), bisphenol-type surfactants such as POE fatty acid bisphenol ethers, polyaromatic cyclic surfactants such as POE benzyl phenyl (or phenyl phenyl) ether and POE styryl phenyl (or phenyl phenyl) ether, silicon-based and fluorine-based surfactants such as POE ether and ester-type silicon and fluorine-based surfactants, and vegetable oil-type surfactants such as POE castor oil and POE hardened castor oil. Examples of anionic surfactants include sulfate-type surfactants such as alkyl sulfates ($C_{12-18}$, Na, $NH_4$, alkanol amine), POE alkyl ether sulfates ($C_{12-18}$, Na, $NH_4$, alkanol amine), POE alkyl phenyl ether sulfates ($C_{12-18}$, $NH_4$, alkanol amine, Ca), POE benzyl (or styryl) phenyl (or phenyl phenyl) ether sulfates (Na, $NH_4$, alkanol amine), and polyoxyethylene and polyoxypropylene block polymer sulfates (Na, $NH_4$, alkanol amine), sulfonate-type surfactants such as paraffin (alkane) sulfonates ($C_{12-22}$, Na, Ca, alkanol amine), AOS ($C_{14-16}$, Na, alkanol amine), dialkyl sulfosuccinates ($C_{8-12}$, Na, Ca, Mg), alkyl benzene sulfonates ($C_{12}$, Na, Ca, Mg, $NH_4$, alkyl amine, alkanol amine, cyclohexyl amine), mono- or dialkyl ($C_{3-6}$) naphthalene sulfonates (Na, $NH_4$, alkanol amine, Ca, Mg), naphthalene sulfonate-formalin condensation products (Na, $NH_4$), alkyl ($C_{8-12}$) diphenyl ether disulfonates (Na, $NH_4$), lignin sulfonates (Na, Ca), POE alkyl ($C_{8-12}$) phenyl ether sulfonates (Na) and POE alkyl ($C_{12-18}$) ether sulfosuccinic acid half esters (Na), carboxylic acid-type resin acid salts ($C_{12-18}$, Na, K, $NH_4$, alkanol amine), N-methyl-fatty acid sarcosinates ($C_{12-18}$, Na) and fatty acid salts (Na, K), and phosphate-type surfactants such as POE alkyl ($C_{12-18}$) ether phosphates (Na, alkanol amine), POE mono- or dialkyl ($C_{8-12}$) phenyl ether phosphates (Na, alkanol amine), POE benzylated (or styrylated) phenyl (or phenyl phenyl) ether phosphates (Na, alkanol amine), polyoxyethylene-polyoxypropylene block polymers (Na, alkanol amine), phosphatidyl choline-phosphatidyl ethanol imines (lecithin) and alkyl ($C_{8-12}$) phosphates. Examples of cationic surfactants include ammonium-type surfactants such as alkyl trimethyl ammonium chlorides ($C_{12-18}$), methyl-polyoxyethylene-alkyl ammonium chlorides ($C_{12-18}$), alkyl-N- methyl pyridium bromides ($C_{12-18}$), mono- or dialkyl ($C_{12-18}$) methylated ammonium

chlorides, and alkyl ($C_{12-18}$) pentamethyl propylene diamine dichlorides, and benzalkonium-type surfactants such as alkyl dimethyl benzalkonium chlorides ($C_{12-18}$) and benzethonium chlorides (octyl phenoxy ethoxy diethyl dimethyl benzyl ammonium chlorides. Examples of amphoteric surfactants include betaine-type surfactants such as dialkyl ($C_{8-12}$) di-amino ethyl betaines and alkyl ($C_{12-18}$) dimethyl benzyl betaines, and glycine-type surfactants such as dialkyl ($C_{8-12}$) diamino ethyl glycines and alkyl ($C_{12-18}$) dimethyl benzyl glycines. These surfactants may be used alone or by mixing two or more types.

Inorganic salts such as calcium carbonate, potassium chloride or sodium sulfate, organic acids such as citric acid, malic acid, fumaric acid and stearic acid and their salts, sugars such as lactose and sucrose, inorganic additives such as alumina powder, silica gel, zeolite, hydroxyapatite, zirconium phosphate, titanium phosphate, titanium oxide, zinc oxide, hydrotalcite, kaolinite, montmorillonite, talc and clay, antioxidants such as n-propyl gallate and butyl hydroxy anisole, pH adjusters and buffering agents such as sodium tripolyphosphate, sodium dihydrogen phosphate and ammonium phosphate, colorants such as blue food dye, methylene blue and pigment red 48, as well as antiseptics, lubricants, ultraviolet absorbers and antistatic agents can be added as necessary to an agricultural chemical formulation of the present invention.

Although there are no particular limitations on the mean particle size of an agricultural chemical formulation of the present invention, and varies according to the purpose of use, a range of 200 μm or less is preferable, while a range of 1 to 100 μm is particularly preferable, for use as a formulation base material, seed powdered coating or powder. In addition, the release rate of the agricultural chemical active ingredient can be adjusted by using two or more types of an agricultural chemical formulation of the present invention having different particle sizes and compositions in combination.

In addition, in the case active ingredients of an agricultural chemical become unstable upon contact, or agricultural chemical active ingredients having considerably differences in physical properties are mixed into a formulation, mixture can be produced that is ordinarily considered to be difficult by preparing a formulation of the present invention for each agricultural chemical active ingredient followed by mixing into a formulation.

In addition, active ingredients of other fungicides and insecticides can be mixed and formulated with a formulation of the present invention (mixture), other fungicides and insecticides can be mixed and used with a formulation of the present invention (tank mixing) or the spraying times can be interchanged for (sequential) treatment in order to expand the scope of application to biological effects.

There are no particular limitations on active ingredients that can be used in mixed formulations, tank mixing or sequential treatment provided they are registered agricultural chemicals, and specific examples include the same active ingredients that were previously listed. Particularly preferable examples include pyrethroid insecticides such as acrinathrin, allethrin, Bioallethrin, barthrin, bifenthrin, Bioethanomethrin, Cyclethrin, cycloprothrin, cyfluthrin, beta-cyfluthrin, cyhalothrin, gamma-cyhalothrin, lambda-cyhalothrin, cypermethrin, alpha-cypermethrin, beta-cypermethrin, theta-cypermethrin, cyphenothrin, deltamethrin, Dimefluthrin, dimethrin, Empenthrin, fenfluthrin, fenpirithrin, fenpropathrin, fenvalerate, Esfenvalerate, fluvalinate, tau-fluvalinate, furethrin, imiprothrin, Metofluthrin, permethrin, Biopermethrin, transpermethrin, phenothrin, prallethrin, Profluthrin, pyresmethrin, resmethrin, bioresmethrin, cismethrin, Tefluthrin, terallethrin, Tetramethrin, tralomethrin, transfluthrin, Etofenprox (2-(4-ethoxyphenyl)-2-methylpropyl 3-phenoxybenzyl ether), flufenprox, Halfenprox, Protrifenbute and Silafluofen.

Dusts, dust-granule mixtures, granules, smoke generators, pastes, wettable powders, water-dispersible granules, tablets, flowable formulation and so forth can be produced according to production processes typically used in the production of agricultural chemical formulation by using an agricultural chemical-containing resin composition of the present invention as a base material. As a specific example, these can be produced by adding a formulation base material such as a surfactant or carrier to an agricultural chemical-containing resin composition prior to pulverizing and crushing followed by pulverizing, crushing and granulation.

An agricultural chemical formulation of the present invention is able to treat both arable land and non-arable land. Seed treatment formulation can be applied by spraying treatment, dust coating, sprinkling treatment or immersion treatment onto seed potatoes and so forth, post-emergence formulation can be applied by sprinkling treatment or top dressing treatment, soil treatment formulation can be applied by surface sprinkling treatment, soil incorporation, soil drench, soil fumigation, pricking-in hole treatment, plant foot treatment, row treatment, seeding furrow treatment, seeding box treatment or seedling pot treatment, paddy treatment agents can be applied by granule application, jumbo granule application or flowable application, and other treatment agents can be applied by space fumigation or lawn treatment. Among these, an agricultural chemical formulation of the present invention is preferably used as a seed treatment formulation or soil treatment formulation.

A seed treatment agent can be applied by, for example, dissolving and dispersing a formulation in a sticker solution (solution in which a water-soluble polymer such as polyvinyl alcohol (PVA) or carboxymethyl cellulose (CMC) and a dye to serve as a marker for chemical treatment are dissolved in water so as to facilitate adhesion during seed treatment), mixing this solution or dispersion with the crop seeds and drying to prepare seed to which the chemical is uniformly adhered. When these seeds are normally planted in soil, the chemical absorbed through the seeds themselves or through the roots that have sprouted from the seeds spreads throughout the entire plant, thereby protecting the plant from illness and pests.

A soil treatment agent can be applied by, for example, by normally seeding or planting and treating with a formulation diluted with water with a sprinkler or watering pot from above either before or after covering with soil, or by treating young seedlings grown in seedling planters or seedling cells with a formulation diluted with water using a sprinkler or watering pot. In the case of treating by using these methods, the chemical is absorbed from the roots of a germinated plant thereby protecting the crop from illness and pests in the same manner as seed treatment.

Moreover, an agricultural chemical-containing resin composition of the present invention can also be used for an application selected from the group consisting of pharmaceuticals, veterinary medicines, food preservatives and biocides in addition to agricultural applications, specific examples of which include applications selected from the group consisting of soil pest extermination agents, termite extermination agents, clothing agents, pest extermination agents, wood pest extermination agents, bait agents, animal external parasite extermination agents, sanitary pest extermination agents, home disinfectants, marine vessel bottom coatings, fishing net and others algae prevention agents, and wood and others mildew-proofing agents.

Although the following provides a more detailed explanation of the present invention through its examples, the scope of the present invention is not limited to these examples.

Example 1

1 g of acetamiprid, 9 g of SMA3000 (styrene-maleic anhydride copolymer base resin; molecular weight: 9500, Satomer) and 10 g of Sipernat D-17 (hydrophobic white carbon, Degussa) were weighed out into a 300 ml round-bottom flask followed by the addition of 100 ml of dichloromethane and completely dissolving in an ultrasonic bath. The majority of the solvent was distilled off from this solution with an evaporator followed by additionally drying for 2 hours at 40°C with a vacuum dryer to obtain a solid. This solid was then completely pulverized with in a mortar and a fine particle composition having a mean particle size of 78 $\mu$m was obtained by screening the portion having a particle size of 44 to 105 $\mu$m with sieves having sieve openings of 44 $\mu$m and 105 $\mu$m. Furthermore, the mean particle size of the present invention is the result of measuring the volumetric mean particle size using the MicroTrack 9320-X-100 (Nikkiso).

Example 2

A fine particle composition having a mean particle size of 75 $\mu$m was obtained by carrying out the same method as Example 1 with the exception of adding SMA2625 (styrene-maleic anhydride copolymer; molecular weight: 9000, Satomer) instead of SMA3000.

Example 3

A fine particle composition having a mean particle size of 80 $\mu$m was obtained by carrying out the same method as Example 1 with the exception of adding SMA17352 (styrene-maleic anhydride copolymer; molecular weight: 7000, Satomer) instead of SMA3000.

Example 4

A fine particle composition having a mean particle size of 80 $\mu$m was obtained by carrying out the same method as Example 1 with the exception of adding Aerosil R972 (hydrophobic white carbon, Aerosil) instead of Sipernat D-17.

Example 5

A fine particle composition having a mean particle size of 86 $\mu$m was obtained by carrying out the same method as Example 1 with the exception of changing the amount of SMA3000 added from 9 g to 8 g, and additionally adding 1 g of PEG20000 (polyethylene glycol; molecular weight: 20000, Wako Pure Chemical Industries).

Example 6

A fine particle composition having a mean particle size of 74 $\mu$m was obtained by carrying out the same method as Example 3 with the exception of changing the amount of acetamiprid added from 1 g to 6 g, changing the amount of SMA17532 added from 9 g to 12 g and changing the amount of Sipernat D-17 added from 10 g to 2 g.

Example 7

A fine particle composition having a mean particle size of 21 μm was obtained from particles that passed through the sieve by screening the particles pulverized in a mortar in Example 6 with a sieve having sieve openings of 44 μm.

Example 8

A fine particle composition having a mean particle size of 72 μm was obtained by carrying out the same method as Example 6 with the exception of changing the amount of SMA17352 added from 12 g to 11 g, and changing the amount of Sipernat D-17 added from 2 g to 3 g.

Example 9

A fine particle composition having a mean particle size of 19 μm was obtained from particles that passed through the sieve by screening the particles pulverized in a mortar in Example 8 with a sieve having sieve openings of 44 μm.

Example 10

A fine particle composition was obtained having a mean particle size of 81 μm by carrying out the same method as Example 6 with the exception of changing the amount of SMA17352 added from 12 g to 10g, and changing the amount of Sipernat D-17 added from 2 g to 4 g.

Example 11

A fine particle composition having a mean particle size of 22 μm was obtained from particles that passed through the sieve by screening the particles pulverized in a mortar in Example 10 with a sieve having sieve openings of 44 μm.

Example 12

A fine particle composition having a mean particle size of 74 μm was obtained by carrying out the same method as Example 6 with the exception of changing the amount of SMA17352 added from 12 g to 6 g, and adding 6 g of a linear polysalicylate (PROVIRON).

Example 13

A fine particle composition having a mean particle size of 73 μm was obtained by carrying out the same method as Example 9 with the exception of using Tamanol 340 (rosin-modified phenolic resin, Arakawa Chemical) instead of the linear polysalicylate.

Example 14

A fine particle composition having a mean particle size of 81 μm was obtained by carrying out the same method as Example 9 with the exception of using 6 g of Malkyd 3002 (rosin-modified maleic acid resin, Arakawa Chemical) instead of the linear polysalicylate.

Example 15

A fine particle composition having a mean particle size of 80 μm was obtained by carrying out the same method as Example 1 with the exception of adding imidacloprid instead of acetamiprid.

Example 16

A fine particle composition having a mean particle size of 76 μm was obtained by carrying out the same method as Example 1 with the exception of adding monuron instead of acetamiprid.

Example 17

6 g of acetamiprid and 12 g of SMA17352 were weighed out into a 100 ml beaker followed by placing this beaker in a mantle heater and melting by heating to a temperature of 200 to 230°C. 2 g of Sipernat D-17 and 0.2 g of NEWKALGEN RX-B (sodium lignin sulfonate, Takemoto Oil & Fat) and uniformly mixing with the melt. Next, the melt was solidified by cooling and pulverized in a mortar followed by screening with a 44 $\mu$m sieve to obtain a fine particle composition having a mean particle size of 23 $\mu$m.

Example 18

A fine particle composition having a mean particle size of 20 $\mu$m was obtained by carrying out the same method as Example 17 with the exception of using SMA2625 instead of SMA17352.

Example 19

2 g of NEWKALGEN RX-B (sodium lignin sulfonate, Takemoto Oil & Fat) and 2 g ofNEWKALGEN BX-C (sodium alkylnaphthalene sulfonate, Takemoto Oil & Fat) were added to 196 g of a solid prior to screening prepared according to the same method as Example 6 followed by mixing well in a vinyl bag. The entire amount of this mixture was then pulverized with a pin mill to obtain a wettable powder 1 containing a fine particle composition having a mean particle size of 23 $\mu$m.

Example 20

A wettable powder 2 containing a fine particle composition having a mean particle size of 19 $\mu$m was obtained by carrying out the same method as Example 19 with the exception of using 196 g of a solid prior to screening prepared according to the same method as Example 8.

Example 21

A wettable powder 3 containing a fine particle composition having a mean particle size of 13 $\mu$m was obtained by carrying out the same method as Example 19 with the exception of using 196 g of a solid prior to screening prepared according to the same method as Example 10.

Example 22

200 g of acetamiprid, 750 g of SMA17352 and 50 g of Sipernat D-17 were placed in a vinyl bag and mixed well. This mixture was then heated, melted, and kneaded in a KRC Kneader Model S-1 (continuous heating kneader, Kurimoto) whose body temperature was heated to 110 to 120°C followed by crushing the resulting kneaded mixture with a food cutter. 5 g of NEWKALGEN RX-B (sodium lignin sulfonate, Takemoto Oil & Fat) and 5 g of NEWKALGEN BX-C (sodium alkylnaphthalene sulfonate, Takemoto Oil & Fat) were added to 490 g of this pulverized product and mixed well in a vinyl bag. The entire amount of this mixture was pulverized with a 4B ULMAX (jet mil, Nisso Engineering) to obtain a wettable powder 4 containing a fine particle composition having a mean particle size of 7.5 $\mu$m.

Example 23

1 g of NEWKALGEN RX-B (sodium lignin sulfonate, Takemoto Oil & Fat) and 1 g ofNEWKALGEN BX-C (sodium alkylnaphthalene sulfonate, Takemoto Oil & Fat) were added to 98 g of the product of mixing and adsorbing bifenthrin active ingredient at 80 to 100°C and Carplex #80D (white carbon, Shionogi & Co.) at 1:1 ratio in a mortar, followed by mixing well in a vinyl bag. The entire amount of this mixture was pulverized with a pin mill to obtain a wettable powder 5 containing a fine particle composition having a mean particle size of 17 $\mu$m. 17 g of wettable powder 5 and 73 g of wettable powder 1 obtained in Example 19 were then mixed well in a vinyl bag to obtain wettable powder 6 having a mean particle size of 20 $\mu$m.

Example 24

105 g of the wettable powder 4 obtained in Example 22, 20 g of Gohsenol GL05S (polyvinyl alcohol, Nippon Synthetic Chemical) and 875 g of Showa Clay (mineral-based carrier, Showa Chemical) were mixed well in a vinyl bag followed by placing in a kneader (KDHJ-2, Fuji Paudal), adding 190 ml of distilled water and kneading for 10 minutes.

This mixture was then placed in a granule molding machine (EXK-1, Fuji Denki Kogyo) equipped with a $\phi$1 mm screen, the extruded product was placed in a porcelain vat to a thickness of 1 to 2 cm, and after drying for 20 hours in a constant temperature bath at 40°C, the dried product was screened with sieves having sieve openings of 0.59 mm and 1.68 mm to obtain granules 1 containing an agricultural chemical-containing resin composition.

Example 25

1.5 g of acetamiprid, 3.25 g of SMA17352 and 0.25 g of Sipernat D-17 were weighed out into a 50 ml Erlenmeyer flask followed by the addition of 20 ml of distilled water and 2.2 g of 28% aqueous ammonia and dissolving by heating for 30 minutes in a warming bath at 80°C. After cooling this dispersion to room temperature, 3.67 g of concentrated hydrochloric acid were added to precipitate crystals. The crystals were collected by suction filtration followed by drying for 2 hours in a 40°C constant temperature bath and then for 2 hours at 40°C using a vacuum dryer to obtain crystals. The crystals were finely pulverized in a mortar and the portion having a particle size of 44 to 105 $\mu$m was screened with sieves having sieve openings of 44 $\mu$m and 105 $\mu$m to obtain a fine particle composition having a mean particle size of 66 $\mu$m.

Comparative Example 1

A fine particle composition having a mean particle size of 82 $\mu$m was obtained by carrying out the same method as Example 1 with the exception of adding Carplex #80D (white carbon, Shionogi & Co.) instead of Sipernat D-17.

Comparative Example 2

A fine particle composition having a mean particle size of 88 $\mu$m was obtained by carrying out the same method as Example 1 with the exception of adding Aerosil 200 (white carbon, Aerosil) instead of Sipernat D-17.

Comparative Example 3

A fine particle composition having a mean particle size of 80 $\mu$m was obtained by carrying out the same method as Example 6 with the exception of adding hydroxystyrene polymer (poly(p-hydroxystyrene; molecular weight: 7600, Nippon Soda, Co.) instead of SMA17352.

Comparative Example 4

A fine particle composition having a mean particle size of 88 $\mu$m was obtained by carrying out the same method as Example 17 with the exception of using polyethylene (molecular weight: 4000, Sigma-Aldrich) instead of SMA17352.

Comparative Example 5

72.3 g of acetamiprid, 2.5 of NEWKALGEN RX-B (sodium lignin sulfonate, Takemoto Oil & Fat), 20.2 g of clay and 5.0 g of Carplex #80 (white carbon, Shionogi & Co.) were mixed well in a mortar followed by pulverizing with a jet mil to obtain a wettable powder containing 70% by weight of acetamiprid.

Example 26

Test Example 1 - Water Dissolution Test

Samples of the fine particle compositions, their wettable powders and granules obtained in Examples 1 to 14 and Examples 17 to 24 along with wettable powder containing 70% by weight of acetamiprid, each containing about 10 mg of acetamiprid active ingredient, were accurately weighed out into 100 ml vials followed by the addition of 80 ml of distilled water at 25°C and 20 ml of an internal standard in the form of aqueous methyl 4-hydroxybenzoate solution (500 mg/L distilled water), covering, inverting five times and allowing to stand undisturbed until the time of sampling in a constant temperature bath at 25°C. In cases in which the sample was not in the form of a wettable powder, a surfactant mixture (composed of a pulverized mixture of 30% by weight of each surfactant and 70% by weight of clay) equal to 10% by weight of the weighed value obtained after weighing the samples was added and mixed well followed by adding distilled water and internal standard and dispersing therein. Roughly 0.7 ml aliquots were sampled predetermined time after inverting five times prior to sampling (and filtering with a 0.45 $\mu$m filter). The concentrations of acetamiprid in the sampled solutions were measured by HPLC to determine the acetamiprid concentration in water, and the water dissolution rate was calculated as a percentage of the acetamiprid concentration in the case the acetamiprid added to the water had completely dissolved in the water. Since different types of active ingredients are used in Examples 15 and 16, the active ingredient concentration in water was analyzed without using an internal standard. Those results are shown in Table 1. In Table 1, in contrast to the water dissolution rate of the 70% by weight acetamiprid wettable powder used for the control being 100% after 15 minutes, the water dissolution rates of the fine particle compositions and their wettable powders of each example were controlled to a low level. In addition, the fine powder compositions of Comparative Examples 1, 2 and 4 demonstrated high water dissolution rates after 15 minutes (initial burst), and subsequent increases in water dissolution rates were not observed for Comparative Examples 1 and 2, thereby resulting in dead stock. Although the water dissolution rate of the fine particle composition of Comparative Example 3 was held to a low level after 15 minutes, an increase in its water dissolution rate was no longer observed starting at 72 hours, thus resulting in dead stock in this case as well.

Table 1

| Composition | Mean particle size (μm) | Water dissolution rate of active ingredient (acetamiprid, imidacloprid, monuron) (%) | | | | | | |
|---|---|---|---|---|---|---|---|---|
| | | 15 min. | 4 hrs. | 24 hrs. | 72 hrs. | 120 hrs. | 168 hrs. | 240 hrs. |
| Ex. 1 | 78 | 6.8 | 13.7 | 28.7 | 38.5 | -- | -- | -- |
| Ex. 2 | 75 | 8.8 | 17.1 | 27.3 | 34.5 | -- | -- | -- |
| Ex. 3 | 80 | 8.0 | 19.5 | 32.9 | 40.9 | -- | -- | -- |
| Ex. 4 | 82 | 18.6 | 22.8 | 29.4 | 36.0 | -- | -- | -- |
| Ex. 5 | 86 | 17.4 | 27.3 | 42.9 | 56.0 | -- | -- | -- |
| Ex. 6 | 74 | 2.7 | 4.2 | 6.2 | 9.9 | -- | -- | -- |
| Ex. 7 | 21 | 10.2 | 14.0 | 20.5 | 29.9 | 38.7 | -- | -- |
| Ex. 8 | 72 | 3.4 | 5.4 | 8.4 | 14.1 | -- | -- | -- |
| Ex. 9 | 19 | 13.9 | 18.8 | 27.4 | 40.3 | 50.9 | -- | -- |
| Ex. 10 | 81 | 4.5 | 7.3 | 11.9 | 20.6 | -- | -- | -- |
| Ex. 11 | 22 | 15.2 | 22.1 | 34.5 | 52.5 | 63.3 | -- | -- |
| Ex. 12 | 74 | 1.7 | 2.8 | 6.3 | 12.3 | 18.7 | -- | -- |
| Ex. 13 | 73 | 3.1 | 14.1 | 36.1 | 47.4 | 55.4 | -- | -- |
| Ex. 14 | 81 | 5.0 | 33.6 | 71.3 | 80.3 | 84.5 | -- | -- |
| Ex. 15 | 80 | 13.6 | 31.5 | 53.4 | 71.2 | 81.0 | -- | -- |
| Ex. 16 | 76 | 4.3 | 10.1 | 17.0 | 21.8 | -- | -- | -- |
| Ex. 17 | 23 | 3.9 | 12.3 | 31.4 | 46.3 | 54.2 | -- | -- |
| Ex. 18 | 20 | 8.5 | 25.6 | 48.7 | 68.5 | 77.4 | -- | -- |
| Ex. 19 | 23 | 8.6 | 13.2 | 20.7 | 30.8 | 39.0 | 42.6 | 50.7 |
| Ex. 20 | 19 | 12.5 | 19.1 | 30.4 | 45.2 | 56.0 | 61.5 | 71.5 |
| Ex. 21 | 13 | 17.8 | 28.7 | 46.4 | 70.5 | 84.3 | 88.8 | 95.5 |
| Ex. 22 | 7.5 | 7.2 | 13.3 | 19.3 | 25.0 | 32.2 | -- | -- |
| Ex. 23 | 20 | 9.7 | 14.5 | 21.3 | 29.2 | 34.5 | -- | -- |
| Ex. 24 | Not measured | 11.3 | 19.5 | 28.6 | 38.2 | 43.8 | -- | -- |
| C. Ex. 1 | 82 | 60.1 | 60.3 | 66.1 | 67.6 | -- | -- | -- |
| C. Ex. 2 | 88 | 55.8 | 62.3 | 68.4 | 70.6 | -- | -- | -- |
| C. Ex. 3 | 80 | 18.3 | 33.7 | 54.2 | 67.0 | 70.9 | 73.7 | 76.8 |
| C. Ex. 4 | 88 | 95.6 | 100.0 | 100.0 | -- | -- | -- | -- |

(continued)

| Composition | Mean particle size (μm) | Water dissolution rate of active ingredient (acetamiprid, imidacloprid, monuron) (%) | | | | | | |
|---|---|---|---|---|---|---|---|---|
| | | 15 min. | 4 hrs. | 24 hrs. | 72 hrs. | 120 hrs. | 168 hrs. | 240 hrs. |
| 70 wt% Acetamiprid wettable powder | -- | 100 | 100 | -- | -- | -- | -- | -- |
| --: Not measured | | | | | | | | |

On the basis of these results, the release rates of acetamiprid in water of the fine particle compositions and their wettable powders of Examples 1 to 14 and 17 to 23 were observed to be controlled to a low level and increase over time without generating dead stock. In addition, similar trends were demonstrated by the fine particle compositions of Examples 15 and 16 that used an active ingredient ingredient other than acetamiprid. Moreover, the addition of a release controller in the form of hydrophobic white carbon or water-soluble polymer, and altering the mean particle size of the fine particle compositions were determined to allow control of the release rate.

Example 27

Test Example 2 - Soil Stability Test

The wettable powders obtained in Examples 19 to 21 were uniformly mixed into soil so that 1 mg of acetamiprid was mixed for every 10 g of soil. The soil mixtures were stored in a constant temperature bath at a temperature of 25°C and relative humidity of 90%, samples were taken at predetermined times and the acetamiprid in the soil was extracted with solvent and analyzed by HPLC to calculate the residual percentage of acetamiprid relative to the initial amount.
A similar test was carried out on the wettable powder containing 70% by weight of acetamiprid of Comparative Example 5 to measure soil stability (residual percentage). Those results are shown in Table 2. In Table 2, the half-life in the soil refers to the amount of time (number of days) required for the amount of acetamiprid initially mixed into the soil to decrease to half that amount under the test conditions.

Table 2

| Elapsed No. of Days | Wettable powder 1 | Wettable powder 2 | Wettable powder 3 | 70 wt% acetamiprid wettable powder |
|---|---|---|---|---|
| 0 days | 100% | 100% | 100% | 100% |
| 7 days | 72% | 54% | 49% | 47% |
| 13 days | 56% | 42% | 41% | 35% |
| 21 days | 39% | 24% | 25% | 23% |
| 28 days | 33% | 29% | 24% | 20% |
| Half-life in soil | 16.6 days | 12.4 days | 11.7 days | 10.5 days |

According to Table 2, the half-lives in the soil of acetamiprid in wettable powders 1, 2 and 3 were longer than the half-life in the soil of acetamiprid in the 70wt% acetamiprid wettable powder, thus demonstrating that wettable powders 1, 2 and 3 have high soil stability.

Example 28

Test Example 3 - Test of Use as a Seed Treatment Agent

Wettable powders 1 to 3 obtained in Examples 19 to 21 were dispersed in 3 ml of a solution (sticker solution), in which 5% by weight of polyvinyl alcohol (Gohsenol GL05S, Nippon Synthetic Chemical) and 1% by weight of a surfactant in the form of sodium lignin sulfonate (NEWKALGEN RX-B, Takemoto Oil & Fat) were dissolved in 94% by weight of water, so as to contain 70 mg of acetamiprid, 0.3 ml of this dispersion were placed in a vinyl bag provided with a zipper containing 20 g of wheat seeds (Ministry of Agriculture, Forestry and Fisheries No. 61), immediately after which the zipper was closed followed by mixing by shaking vigorously for 30 seconds to adhere the chemical to the wheat seeds. The seeds were then spread out in a thin layer in a vat and air-dried overnight at room temperature to obtain wheat seeds adhered with 35 g of acetamiprid per 100 kg of seeds. The resulting seeds were planted in a No. 2 unglazed flower pot containing Kuroboku soil followed by inoculating with adults and larva of 20 wheat aphids per plant 23 days (or 40 days) later. The number of parasites was counted at 2, 4 and 7 days after inoculation to evaluate residual efficacy. For the control, similar tests were carried out in the case of using the 70% by weight acetamiprid wettable powder of Comparative Example 5 and in the case of non-treatment. Those results are shown in Table 3.

Table 3

| Formulation | Inoculation at 23 days after planting | | | Inoculation at 40 days after planting | | |
|---|---|---|---|---|---|---|
| | After 2 days | After 4 days | After 7 days | After 2 days | After 4 days | After 7 days |
| Wettable powder 1 | 8 | 2 | 0 | 2 | 0 | 0 |
| Wettable powder 2 | 13 | 0 | 0 | 11 | 3 | 0 |
| Wettable powder 3 | 8 | 2 | 0 | 8 | 2 | 0 |
| 70 wt% acetamiprid wettable powder | 7 | 1 | 0 | 7 | 7 | 38 |
| Untreated control | 39 | 57 | 189 | 49 | 87 | 276 |

According to Table 3, the efficacy of the agricultural chemical active ingredient of wettable powders 1, 2 and 3 persisted longer than that of the wettable powder containing 70% by weight acetamiprid of Comparative Example 5.

Example 29

Test Example 4 - Test of Use as a Soil Treatment Agent

25.39 g each of the wettable powders 1 and 2 obtained in Examples 19 and 20 were dispersed in 2.346 liters of water to prepare dispersions that were used in a field effects test against Colorado potato beetle in potatoes. Chemical treatment includes sprinkling planting rows with 18.5 g of wettable powder per 100 m of seeding troughs from above the seed potatoes during planting of seed potatoes. Chemical effects were evaluated by investigating the number of adult and larval Colorado potato beetles that grew in the potatoes 44 days after planting. A treated area in which wettable powder containing 70% by weight of the same active ingredient in the form of acetamiprid was used, and an untreated area, were used as controls. Those results are shown in Table 4.

Table 4

| Formulation | 44 Days after Planting | | |
|---|---|---|---|
| | No. of Adults | No. of Larva | Total |
| Wettable powder 1 | 3.3 | 2.0 | 5.0 |
| Wettable powder 2 | 1.8 | 23.8 | 25.6 |
| 70 wt% acetamiprid wettable powder | 2.5 | 33.5 | 36.0 |
| Untreated control | 0.5 | 110.8 | 111.3 |

According to Table 4, wettable powders 1 and 2 were determined to demonstrated improved control effects in the field as compared with the wettable powder containing 70% by weight acetamiprid of Comparative Example 5.

Example 30

Test Example 5 - Test of Use as a Seed Treatment Agent by

Combining with Synthetic Pyrethroids

Wettable powder 2 obtained in Example 20 was dispersed in 2.8 ml of a solution (sticker solution), in which 5% by weight of polyvinyl alcohol (Gohsenol GL05S, Nippon Synthetic Chemical) and 1% by weight of a surfactant in the form of sodium lignin sulfonate (NEWKALGEN RX-B, Takemoto Oil & Fat) were dissolved in 94% by weight of water, so as to contain 400 mg of acetamiprid, 0.35 ml of this dispersion were placed in a vinyl bag provided with a zipper containing 8 g of rapeseed seeds, immediately after which the zipper was closed followed by mixing by shaking vigorously for 30 seconds to adhere the chemical to the rapeseed seeds. The seeds were then spread out in a thin layer in a vat and air-dried overnight at room temperature to obtain rapeseed seeds adhered with 500 g of acetamiprid per 100 kg of seeds.

1 g of cypermethrin wettable powder (active ingredient: 6% by weight) was dispersed in 1.3 ml of distilled water, and 0.65 ml of this dispersion (20 mg as cypermethrin) were placed in a vinyl bag provided with a zipper containing 8 g of rapeseed seeds adhered with 500 g of acetamiprid per 100 kg of seeds, immediately after which the zipper was closed followed by mixing by shaking vigorously for 30 seconds to adhere the chemical to the rapeseed seeds. The seeds were then spread out in a thin layer in a vat and air-dried for 1 to 2 hours at room temperature followed by again placing in a vinyl bag provided with a zipper, adding 0.65 ml of the aforementioned dispersion and repeating the same procedure. These seeds were then spread out in a thin layer in a vat followed by allowing to air dry overnight at room temperature to obtain rapeseed seeds adhered with 500 g of cypermethrin and 500 g of acetamiprid per 100 kg of seeds.

In addition, wettable powder 2 obtained in Example 20 was dispersed in 1.1 g of bifenthrin SC (active ingredient: 7.2% by weight) so as to contain 80 mg of acetamiprid, and 0.55 ml of this dispersion (40 mg as bifenthrin and 40 mg of acetamiprid) were placed in a vinyl bag provided with a zipper containing 8 g of rapeseed seeds, followed immediately by mixing by shaking vigorously for 30 seconds to adhere the chemical to the seeds. The seeds were then spread out in a thin layer in a vat and air-dried overnight at room temperature to obtain rapeseed seeds adhered with 500 g of bifenthrin and 500 g of acetamiprid per 100 kg of seeds.

The resulting seeds were planted in a No. 2 flower pot containing alluvial soil and cultivated in a greenhouse. Eighteen days after seeding, rapeseed seedlings were transferred to a cage in which 100 adult yellow striped flea beetles had been released, and after allowing to stand for 3 days, the number of plant damage scars caused by the adult yellow striped flea beetles was counted for three plants in each test group. For the control, similar tests were carried out in the case of treating with 500 g of wettable powder 2, cypermethrin or bifenthrin alone per 100 kg of seeds, and in the case of non-treatment. Those results are shown in Table 5. Control rate (%) = ((no. of scars of untreated group - no. of scars of treated group)/(no. of scars of untreated group)) X 100.

Table 5

| Formulation | Inoculation 18 days after seeding | | | |
|---|---|---|---|---|
| | No. of plant damage scars/3 plants | | | Control rate (%) |
| | Repeat A | Repeat B | Average | |
| Wettable powder 2 + cypermethrin | 51 | 46 | 49 | 82.4 |
| Wettable powder 2 + bifenthrin | 37 | 71 | 54 | 80.6% |
| Wettable powder 2 | 89 | 67 | 78 | 72.0 |
| Cypermethrin | 296 | 241 | 269 | 3.6 |
| Bifenthrin | 306 | 234 | 270 | 3.2 |
| Untreated group | 312 | 246 | 279 | -- |

According to Table 5, the combined use of wettable powder 2 with the synthetic pyrethroids cypermethrin or bifenthrin was determined to demonstrate higher control effects against yellow striped flea beetles than treating with wettable powder 2 alone, and synergistic effects were observed between wettable powder 2 and synthetic pyrethroids.

Example 31

Test Example 6 - Test of Use as a Cell Tray Drench Treatment Agent

3.57 g of wettable powder 2 obtained in Example 20 were dispersed in 1 liter of water to prepare a chemical liquid. 0.5 ml of chemical liquid per plant were dropped onto Chinese cabbage seedlings at the 4 to 4.5 leaf stage cultured in cell trays from above using a pipette. On the day following chemical treatment, the treated seedlings were planted in No. 6 flower pots containing Kuroboku soil and cultivated in a greenhouse. Each pot was covered with a cylindrical cage at 2, 14 and 28 days after planting, 10 adult yellow striped flea beetles were released inside the cages, and the numbers of plant damage scars caused by the adult yellow striped flea beetles were counted for four pots in each test group 6 days after releasing the insect pests. For the control, similar tests were carried out in the case of treating with commercially available bifenthrin SC and in the case of non-treatment. Those results are shown in Table 6.

Table 6

| Formulation | No. of plant damage scars/4 plants | | | Control rate (%) | | |
|---|---|---|---|---|---|---|
| | After 2 days | After 14 days | After 28 days | After 2 days | After 14 days | After 28 days |
| Wettable powder 2 | 5 | 41 | 320 | 83.9 | 88.3 | 80.0 |
| Bifenthrin | 4 | 103 | 934 | 87.1 | 70.6 | 40.7 |
| Untreated group | 31 | 350 | 1575 | -- | -- | -- |

According to Table 6, wettable powder 2 was determined to demonstrate residual efficacy that is superior to that of bifenthrin SC.

Example 32

Test Example 7 - Test of Use as a Paddy Treatment Agent

By Seedling Box Drench Treatment

Wettable powder 4 obtained in Example 22 was diluted with water to a predetermined concentration to prepare a chemical liquid. 10 ml per tray of the chemical liquid was dropped onto the surface of soil containing seedlings having a height of about 10 cm cultivated in small plastic trays filled with granular planting soil using a pipette. Following chemical treatment, the trays were covered with a cylindrical cage and 6 two-instar *Nephotettix cincticeps* were released inside followed by counting the number of plant damage scars at 3 and 7 days after releasing the insect pests. For the control, similar tests were carried out for the case of treating with imidacloprid, and in the case of non-treatment. The control imidacloprid was sprayed onto the plants after adjusting to 5% by weight in dimethylformamide containing 1.5% by weight of Tween 20 and diluting with water. Those results are shown in Table 7.

$$\text{Corrected insecticidal rate (\%)} = ((\text{survival rate in untreated group} - \text{survival rate in treated group})/\text{survival rate in untreated group}) \times 100$$

Table 7

| Formulation | Concentration ppm | Insect mortality rate (%) | | Corrected insecticidal rate (%) | |
|---|---|---|---|---|---|
| | | After 3 days | After 7 days | After 3 days | After 7 days |
| Wettable powder 4 | 0.12 | 100 | 100 | 100 | 100 |
| | 0.03 | 83 | 100 | 83 | 100 |
| | 0.08 | 83 | 100 | 83 | 100 |

(continued)

| Formulation | Concentration ppm | Insect mortality rate (%) | | Corrected insecticidal rate (%) | |
|---|---|---|---|---|---|
| | | After 3 days | After 7 days | After 3 days | After 7 days |
| Imidacloprid | 0.12 | 100 | 100 | 100 | 100 |
| | 0.03 | 83 | 100 | 83 | 100 |
| | 0.08 | 63 | 83 | 63 | 83 |
| Untreated group | -- | 0 | 0 | -- | -- |

According to Table 7, wettable powder 4 was determined to demonstrate insecticidal activity that was superior to that of imidacloprid, and was determined to be useful as a paddy seedling box drench agent.

Example 33

Test Example 8 - Efficacy Test as a Termite Soil Treatment Agent

0.5 g of wettable powder 4 obtained in Example 22 were dispersed in 1.6 liters of tap water to prepare a chemical liquid. 1 ml of this chemical liquid was added to 14 g of Kuroboku soil and stirred to obtain a uniform mixture. The treated soil was placed in a constant temperature bath at 36°C, and mixed by stirring while matching to the initial weight by adding the amount of water lost to evaporation every 7 days. The treated soil was packed into a polyvinyl chloride tube (inner diameter: 1 mm, length: 5 cm) 21 days after treatment, and this tube was then connected to a bridge section located at height of 2 cm from the bottom between two PET plastic test containers (inner diameter: 5 cm, height: 11 cm). 30 g of untreated soil were placed in one of the test containers and 60 worker oriental termites and 1 soldier oriental termite were inoculated into the soil 2 days later. Feed in the form of 5 g of shredded cardboard and 5 ml of tap water were placed in the other test container. The test containers were allowed to stand in a constant temperature chamber at 25°C followed by evaluation of chemical effects by observing boring status, behavior status and health status in the treated soil for 21 days. A treated group in which wettable powder containing 70% by weight of the same active ingredient amount of acetamiprid (Comparative Example 5), and a chemical untreated group, were provided as controls. The tests were repeated twice. The results are shown in Table 8.

Table 8

| Formulation | Repeat | Boring degree* | | | | | | |
|---|---|---|---|---|---|---|---|---|
| | | After 1 day | After 3 days | After 5 days | After 7 days | After 10 days | After 14 days | After 21 days |
| Wettable powder 4 | A | 0 | 0 | 0 | 0 | 0 | 0 | 0 |
| | B | 0 | 0 | 2 | 2 | 2 | 2 | 2 |
| | Avg. | 0 | 0 | 1 | 1 | 1 | 1 | 1 |
| 70 wt% acetamiprid wettable powder | A | 0 | 0 | 5 | 5 | 5 | 5 | 5 |
| | B | 1 | 1 | 2 | 2 | 3 | 5 | 5 |
| | Avg. | 0.5 | 0.5 | 3.5 | 3.5 | 4 | 5 | 5 |
| Untreated group | A | 5 | 5 | 5 | 5 | 5 | 5 | 5 |
| | B | 5 | 5 | 5 | 5 | 5 | 5 | 5 |
| | Avg. | 5 | 5 | 5 | 5 | 5 | 5 | 5 |
| *: Boring degree 0: No bored holes observed in test soil<br>Boring degree 1: Bored distance of less than 1 cm<br>Boring degree 2: Bored distance of less than 2 cm<br>Boring degree 3: Bored distance of less than 3 cm<br>Boring degree 4: Bored distance of less than 4 cm<br>Boring degree 5: Bored distance of 4 cm or more | | | | | | | | |

According to Table 8, wettable powder 4 was determined to improve oriental termite control effects during soil treatment as compared with the water-dispersible power containing 70% by weight acetamiprid of Comparative Example 5.

INDUSTRIAL APPLICABILITY

As has been described above, since the use of an agricultural chemical formulation of the present invention makes it possible to inhibit the phenomenon in which a large amount of an agricultural chemical active ingredient is released in a short period of time immediately after agricultural chemical treatment, namely the phenomenon in which the initial burst is inhibited and the agricultural chemical active ingredient which should inherently be released remains without the entire amount being released, or in other words, dead stock, residual efficacy can be maintained, the problem of an increased amount of agricultural chemical active ingredient remaining in the crop or causing chemical damage can be solved, and the agricultural chemical active ingredient can be prevented from remaining in the environment. In addition, an agricultural chemical formulation of the present invention, in addition to the effects described above, also improves light stability, controls dispersivity, has the effects of improving residual efficacy of the agricultural chemical active ingredient and reducing loss into the environment by improving rain resistance, and has effects such as reducing the total amount of agricultural chemical sprayed, reducing the number of sprayings, and reducing toxicity to the sprayer, and is particularly useful as a seed treatment agent and soil treatment agent.

The following description pages 47 to 51 contain preferred embodiments. Accordingly, the term "claim" as used therein refers to such a "preferred embodiment".

1. An agricultural chemical-containing resin composition, comprising: a composition containing (1) an agricultural chemical active ingredient, (2) styrene-maleic anhydride copolymer or styrene-maleic anhydride copolymer-resin mixture, and (3) a release controller, forming a compatible state or matrix.

2. An agricultural chemical-containing resin composition according to claim 1, wherein a resin other than the styrene-maleic anhydride copolymer of the styrene-maleic anhydride copolymer-resin mixture is a rosin or derivative thereof, or a copolymer having repeating units derived from salicylic acid or derivative thereof.

3. An agricultural chemical-containing resin composition according to claim 1 or 2, wherein the release controller is a water-soluble polymer, silicon oxide or surfactant.

4. An agricultural chemical-containing resin composition according to claim 3, wherein the silicon oxide is hydrophobic white carbon.

5. An agricultural chemical-containing resin composition according to any one of claims 1 to 4, wherein the agricultural chemical active ingredient is an ingredient for which the solubility in water at 25 deg. C is 100 ppm or more.

6. An agricultural chemical-containing resin composition according to any one of claims 1 to 5, wherein the agricultural chemical active ingredient is a neonicotinoid-based compound.

7. An agricultural chemical-containing resin composition according to claim 6, wherein the neonicotinoid-based compound is at least one selected from the group consisting of nitenpyram, imidacloprid, acetamiprid, thiamethoxam, clothianidin, thiacloprid and dinotefuran.

8. An agricultural chemical-containing resin composition according to any one of claims 1 to 7, wherein the mean particle size of the composition is 200 m or less.

9. An agricultural chemical-containing resin composition according to any one of claims 1 to 8, wherein the mean particle size of the composition is within the range of 1 to 100 m.

10. A production process of an agricultural chemical-containing resin composition according to any one of claims 1 to 9, comprising: a step in which (1) an agricultural chemical active ingredient, (2) styrene-maleic anhydride copolymer or styrene-maleic anhydride copolymer-resin mixture, and (3) a release controller are mixed, melted by heating, kneaded and cooled.

11. A production process of an agricultural chemical-containing resin composition according to any one of claims 1 to 9, comprising: a step in which (1) an agricultural chemical active ingredient, (2) styrene-maleic anhydride copolymer or styrene-maleic anhydride copolymer-resin mixture, and (3) a release controller are dissolved, dispersed or mixed in an organic solvent followed by distilling off the organic solvent.

12. A production process of an agricultural chemical-containing resin composition according to any one of claims 1 to 9, comprising: a step in which after (2) a styrene-maleic anhydride copolymer or styrene-maleic anhydride copolymer-resin mixture is dissolved in an alkali aqueous solution, (1) agricultural chemical active ingredient and (3) a release controller are dissolved, dispersed or mixed to prepare an acidic solution followed by filtration and drying.

13. An agricultural chemical formulation, comprising: an agricultural chemical-containing resin composition according to any one of claims 1 to 9.

14. An agricultural chemical formulation, comprising: at least one of an agricultural chemical-containing resin composition containing (1) an agricultural chemical active ingredient, (2) styrene-maleic anhydride copolymer or styrene-maleic anhydride copolymer-resin mixture, and (3) a release controller, forming a compatible state or matrix, said agricultural chemical-containing resin composition having a mean particle size of 200 m or less, and said formulation is used as a seed treatment agent, soil treatment agent or stem and leaf treatment agent.

15. An agricultural chemical formulation according to claim 14, wherein the mean particle size of the agricultural chemical-containing resin composition is within the range of 1 to 100 m.

16. An agricultural chemical formulation according to claim 14 or 15, wherein the agricultural chemical active ingredient is an ingredient for which the solubility in water at 25 deg. C is 100 ppm or more.

17. An agricultural chemical formulation according to any one of claims 14 to 16, wherein the agricultural chemical active ingredient is a neonicotinoid-based compound.

18. An agricultural chemical formulation according to claim 17, wherein the neonicotinoid-based compound is at least one selected from the group consisting of nitenpyram, imidacloprid, acetamiprid, thiamethoxam, clothianidin, thiacloprid and dinotefuran.

19. An agricultural chemical formulation according to any one of claims 14 to 18, further comprising: at least one agricultural chemical active ingredient other than the agricultural chemical-containing resin composition.

20. An agricultural chemical formulation according to claim 19, wherein at least one of the agricultural chemical active ingredient other than the agricultural chemical-containing resin composition is a pyrethroid.

21. A treatment method, comprising: treating with a composition containing at least one of the agricultural chemical formulation according to any one of claims 14 to 18 and at least one agricultural chemical active ingredient either simultaneously or at different times.

22. A treatment method according to claim 21, wherein at least one of the agricultural chemical active ingredient is a pyrethroid.

23. A plant seed treated using a treatment method according to claim 21 or 22.

24. An agricultural chemical-containing formulation, comprising: at least one of the agricultural chemical-containing resin composition according to any one of claims 1 to 9, or at least one of the agricultural chemical-containing resin composition or at least one of the agricultural chemical active ingredient according to any one of claims 1 to 9, wherein said agricultural chemical-containing formulation being used in an application selected from the group consisting of pharmaceuticals, veterinary medicines, food preservatives and biocide agents.

25. An agricultural chemical-containing formulation according to claim 24, wherein the application is selected from the group consisting of soil pest extermination agents, termite extermination agents, clothing agents, pest insect extermination agents, wood pest insect extermination agents, bait agents, animal external parasite extermination agents, sanitary pest insect extermination agents, home disinfectants, marine vessel bottom coatings, fishing net and other algae prevention agents, and wood and other mildew-proofing agents.

26. An agricultural chemical-containing formulation according to claim 24 or 25, wherein at least one of agricultural chemical active ingredients of the agricultural chemical-containing resin composition according to any one of claims 1 to 9 is a pyrethroid.

**Claims**

1.  An agricultural chemical-containing resin composition, comprising: a composition containing (1) an agricultural chemical active ingredient, (2) styrene-maleic anhydride copolymer or styrene-maleic anhydride copolymer-resin mixture, and (3) a release controller, wherein the components of (1), (2) and (3) are dissolved or dispersed in a continuous phase, wherein the release controller is a water soluble polymer or silicon oxide.

2.  The agricultural chemical-containing resin composition according to claim 1, wherein the resin other than the styrene-maleic anhydride copolymer of the styrene-maleic anhydride copolymer-resin mixture is a rosin, abietic acid, tall rosin, rosin-modified phenol or rosin-modified maleic acid, or a copolymer in which two or more molecules of salicylic acid, which may be the same or of two or more types, are condensed, or a copolymer in which salicylic acid and another hydroxycarboxylic acid are condensed.

3.  The agricultural chemical-containing resin composition according to claim 1 or 2, wherein the silicon oxide is hydrophobic white carbon.

4.  The agricultural chemical-containing resin composition according to any one of claims 1 to 3, wherein the agricultural chemical active ingredient is an ingredient for which the solubility in water at 25°C is 100 ppm or more.

5.  The agricultural chemical-containing resin composition according to any one of claims 1 to 4, wherein the agricultural chemical active ingredient is a neonicotinoid-based compound.

6.  The agricultural chemical-containing resin composition according to claim 5, wherein the neonicotinoid-based compound is at least one selected from the group consisting of nitenpyram, imidacloprid, acetamiprid, thiamethoxam, clothianidin, thiacloprid and dinotefuran.

7.  The agricultural chemical-containing resin composition according to any one of claims 1 to 6, wherein the mean particle size of the composition is 200 $\mu$m or less.

8.  The agricultural chemical-containing resin composition according to any one of claims 1 to 7, wherein the mean particle size of the composition is within the range of 1 to 100 $\mu$m.

9.  A production process of an agricultural chemical-containing resin composition according to any one of claims 1 to 8, comprising: a step in which (1) an agricultural chemical active ingredient, (2) styrene-maleic anhydride copolymer or styrene-maleic anhydride copolymer-resin mixture, and (3) a release controller are mixed, melted by heating, kneaded and cooled.

10. A production process of an agricultural chemical-containing resin composition according to any one of claims 1 to 8, comprising: a step in which (1) an agricultural chemical active ingredient, (2) styrene-maleic anhydride copolymer or styrene-maleic anhydride copolymer-resin mixture, and (3) a release controller are dissolved, dispersed or mixed in an organic solvent followed by distilling off the organic solvent.

11. A production process of an agricultural chemical-containing resin composition according to any one of claims 1 to 8, comprising: a step in which after (2) a styrene-maleic anhydride copolymer or styrene-maleic anhydride copolymer-resin mixture is dissolved in an alkali aqueous solution, (1) agricultural chemical active ingredient and (3) a release controller are dissolved, dispersed or mixed in or with the aqueous solution, to prepare an acidic solution followed by filtration and drying.

12. An agricultural chemical formulation, comprising: an agricultural chemical-containing resin composition according to any one of claims 1 to 8.

13. The agricultural chemical formulation according to claim 12, wherein said agricultural chemical-containing resin composition has a mean particle size of 200 $\mu$m or less, and said formulation is used as a seed treatment agent, soil treatment agent or stem and leaf treatment agent.

14. The agricultural chemical formulation according to claim 13, wherein the mean particle size of the agricultural chemical-containing resin composition is within the range of 1 to 100 $\mu$m.

15. The agricultural chemical formulation according to claim 13 or 14, wherein the agricultural chemical active ingredient is an ingredient for which the solubility in water at 25°C is 100 ppm or more.

16. The agricultural chemical formulation according to any one of claims 13 to 15, wherein the agricultural chemical active ingredient is a neonicotinoid-based compound.

17. The agricultural chemical formulation according to claim 16, wherein the neonicotinoid-based compound is at least one selected from the group consisting of nitenpyram, imidacloprid, acetamiprid, thiamethoxam, clothianidin, thiacloprid and dinotefuran.

18. The agricultural chemical formulation according to any one of claims 13 to 17, further comprising: at least one agricultural chemical active ingredient other than the agricultural chemical-containing resin composition.

19. The agricultural chemical formulation according to claim 18, wherein at least one of the agricultural chemical active ingredient other than the agricultural chemical-containing resin composition is a pyrethroid.

20. A treatment method, comprising: treating with a composition containing at least one of the agricultural chemical formulation according to any one of claims 13 to 17 and at least one agricultural chemical active ingredient either simultaneously or at different times, wherein the treatment method is not used for a prophylactic/therapeutic method of the animal/human body.

21. The treatment method according to claim 20, wherein at least one of the agricultural chemical active ingredient is a pyrethroid.

22. A plant seed treated using a treatment method according to claim 20 or 21.

23. An agricultural chemical-containing formulation, comprising: at least one of the agricultural chemical-containing resin composition according to any one of claims 1 to 8, wherein said agricultural chemical-containing formulation being used in an application selected from the group consisting of pharmaceuticals, veterinary medicines, food preservatives and biocide agents.

24. The agricultural chemical-containing formulation according to claim 23, wherein the application is selected from the group consisting of soil pest extermination agents, termite extermination agents, clothing agents, pest insect extermination agents, wood pest insect extermination agents, bait agents, animal external parasite extermination agents, sanitary pest insect extermination agents, home disinfectants, marine vessel bottom coatings, fishing net and other algae prevention agents, and wood and other mildew-proofing agents.

25. The agricultural chemical-containing formulation according to claim 23 or 24, wherein at least one of agricultural chemical active ingredients of the agricultural chemical-containing resin composition according to any one of claims 1 to 8 is a pyrethroid.

Europäisches
Patentamt

European
Patent Office

Office européen
des brevets

## EUROPEAN SEARCH REPORT

**Application Number**

EP 13 00 5722

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/21913 A2 (MONSANTO TECHNOLOGY LLC [US]; ASRAR JAWED [US]; ESSINGER JAMES F JR [U) 21 March 2002 (2002-03-21) * claims 15,16,21,22,27,53,56 * * page 24, lines 8-18 * | 1-25 | INV. A01N25/00 A01N25/08 A01N25/10 A01N25/12 A01N43/50 |
| X | WO 99/00013 A2 (MONSANTO CO [US]) 7 January 1999 (1999-01-07) * claims 1,6,9,22,24,25,31,32 * | 1-25 | A01N47/30 A01N47/44 A01P7/04 |
| X | US 4 435 383 A (WYSONG ROBERT D [US]) 6 March 1984 (1984-03-06) * claims 6,13,30 * * examples 1-14 * * column 12, line 50 * | 1-25 | |
| X | US 4 557 929 A (WYSONG ROBERT D [US]) 10 December 1985 (1985-12-10) * examples 1-14 * * claims 1-3 * * column 12, line 35 * | 1-25 | |
| | | | TECHNICAL FIELDS SEARCHED (IPC) |
| X | US 2 897 121 A (WAGNER JOHN G) 28 July 1959 (1959-07-28) * examples 1-10 * * claims 1-13 * * column 3, last paragraph * * column 7; example 5 * * tables II,V * * example 4 * | 1-25 | A01N |
| X,D | JP H08 92007 A (BAYER AGROCHEM KK) 9 April 1996 (1996-04-09) * abstract * | 1,2,4-25 | |

The present search report has been drawn up for all claims

| Place of search | Date of completion of the search | Examiner |
|---|---|---|
| Munich | 30 January 2014 | Marie, Gérald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                       
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 00 5722

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2014

| Patent document cited in search report | | Publication date | Patent family member(s) | | Publication date |
|---|---|---|---|---|---|
| WO 0221913 | A2 | 21-03-2002 | AU | 9082501 A | 26-03-2002 |
| | | | US | 2002103086 A1 | 01-08-2002 |
| | | | WO | 0221913 A2 | 21-03-2002 |
| WO 9900013 | A2 | 07-01-1999 | AR | 013151 A1 | 13-12-2000 |
| | | | AU | 751267 B2 | 08-08-2002 |
| | | | AU | 8172798 A | 19-01-1999 |
| | | | CA | 2294332 A1 | 07-01-1999 |
| | | | CZ | 9904677 A3 | 14-06-2000 |
| | | | DE | 69821940 D1 | 01-04-2004 |
| | | | DE | 69821940 T2 | 17-03-2005 |
| | | | EP | 0994650 A2 | 26-04-2000 |
| | | | PL | 342112 A1 | 21-05-2001 |
| | | | US | 7070795 B1 | 04-07-2006 |
| | | | US | 2006193882 A1 | 31-08-2006 |
| | | | WO | 9900013 A2 | 07-01-1999 |
| US 4435383 | A | 06-03-1984 | AR | 228875 A1 | 29-04-1983 |
| | | | AU | 547429 B2 | 17-10-1985 |
| | | | AU | 7482081 A | 11-03-1982 |
| | | | BR | 8105635 A | 18-05-1982 |
| | | | CA | 1157371 A1 | 22-11-1983 |
| | | | CS | 228530 B2 | 16-04-1984 |
| | | | DE | 3161708 D1 | 26-01-1984 |
| | | | DK | 392281 A | 06-03-1982 |
| | | | EP | 0047648 A2 | 17-03-1982 |
| | | | ES | 8302031 A1 | 01-04-1983 |
| | | | GR | 75767 A1 | 02-08-1984 |
| | | | HU | 192071 B | 28-05-1987 |
| | | | IE | 51788 B1 | 01-04-1987 |
| | | | NZ | 198281 A | 19-10-1984 |
| | | | PH | 18622 A | 21-08-1985 |
| | | | PL | 232921 A1 | 10-05-1982 |
| | | | PT | 73620 A | 01-10-1981 |
| | | | RO | 84023 A1 | 12-05-1984 |
| | | | TR | 21175 A | 30-11-1983 |
| | | | US | 4435383 A | 06-03-1984 |
| US 4557929 | A | 10-12-1985 | NONE | | |
| US 2897121 | A | 28-07-1959 | NONE | | |
| JP H0892007 | A | 09-04-1996 | NONE | | |

EPO FORM P0459

For more details about this annex : see Official Journal of the European Patent Office, No. 12/82

**EP 2 708 122 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004231403 A
- JP 2005050857 A
- JP H892007 B
- JP H11315004 B